# EUROPÄISCHE PATENTSCHRIFT

(11) **EP 0 451 590 B1**
(45) Veröffentlichungstag und Bekanntmachung des Hinweises auf die Patenterteilung: **13.01.1999**
(21) Anmeldenummer: 91104626.6
(22) Anmeldetag: 23.03.1991
(51) Int. Cl.: C08G 18/68, C09D 175/06, C09D 175/14

(54) **Verfahren zur Herstellung eines ungesättigten Polyesterpolyurethans sowie ein Verfahren zur Herstellung einer wässrigen Lackzusammensetzung.**
Process for the manufacture of an unsaturated polyesterpolyurethane and a process for the manufacture of an aqueous lacquer composition.
Procédé pour la fabrication d' un polyesterpolyuréthane insaturé ainsi que procédé pour la fabrication d'une composition aqueuse de laque.

(30) Priorität: 07.04.1990 DE 4011349
(43) Veröffentlichungstag der Anmeldung: 16.10.1991
(73) Patentinhaber: Wolff Walsrode Aktiengesellschaft, D-29655 Walsrode (DE)
(72) Erfinder: Kressdorf, Burkhard, Dr., W-3030 Walsrode (DE); Lühmann, Erhard, D.I., W-3036 Bomlitz 1 (DE); Hoppe, Lutz, Dr., W-3030 Walsrode (DE); Koch, Wolfgang, Dr., W-3036 Bomlitz (DE); Szablikowski, Klaus, Dr., W-3030 Walsrode 1 (DE)
(74) Vertreter: Hellfeldt, Kurt, Dr.

(56) Entgegenhaltungen:
- EP-A- 0 002 129
- EP-A- 0 356 848
- DE-A- 2 923 338
- US-A- 3 703 498
- CHEMICAL ABSTRACTS (HOST: STN) Band 100, Nr. 2, 9. Januar 1984, Zusammenfassung Nr. 8623j, Columbus, Ohio, US, zusammen mit Registry File (HOST: STN), Registriernummern 88117-56-0 und 88117-57-1; & JP-A-58 093 713 (NIPPON SYNTHETIC CHEMICAL INDUSTRY) 3. Juni 1983

## Beschreibung

Die vorliegende Erfindung betrifft ein Verfahren zur Herstellung eines ungesättigten Polyesterurethans auf Basis eines eine Allylethergruppierung enthaltenden Polyesters A und eines Polyisocyanats B sowie ein Verfahren zur Herstellung einer wäßrigen Lackzusammensetzung unter Verwendung eines solchen Polyesterturethans.

Zur Erzielung von elastischen, abriebfesten Beschichtungen sind urethangruppenhaltige Lackrohstoffe bekannt. Die Urethangruppen können starke Wechselwirkungen innerhalb der Polymerketten ausüben, die ihre Verwendung als wasser- und chernikalienbeständige Beschichtungen begünstigt. Hervorzuheben ist dabei auch die sehr gute Haftung von Polyurethanen auf den verschiedensten Substraten aufgrund starker polarer Wechselwirkung mit diesen Substraten.

Besonders vorteilhaft sind urethangruppenhaltige Rohstoffe, die ethylenisch ungesättigte Gruppen enthalten und sowohl lufttrocknend wie auch peroxidisch und mit energiereichen Strahlen härtbar sind. Solche Polyurethanprodukte werden z.B. in Form von strahlenhärtbaren Urethanacrylaten angewendet (US-A-4 451 509, EP-A-53 749). Derartige Lacke müssen mit Reaktivverdünnern auf der Basis von Acrylsäure verdünnt werden. Diese weisen jedoch ebenso wie die Urethanacrylate physiologische Nachteile auf. So können sie zu Hautreizungen und erhöhter Sensibilisierung führen.

Andererseits können die Verarbeitungsviskositäten auch durch die Verwendung von inerten organischen Lösungsmittel eingestellt werden, die jedoch bei der Trocknung zu einer erhöhten Luftbelastung führen und die Verwendung aufwendiger Entsorgungsanlagen bedingen (vergleiche CA-PS 1192331).

In der EP-A-0 315 920 werden allyletherfunktionelle ungesättigte Polyester-Urethane beschrieben. Diese Urethane können nur in organischen Lösungsmitteln und unter Zusatz von Reaktivverdünnern verwendet werden. Es wird erst ein Polyester hergestellt, der nachfolgend mit einem Diisocyanat umgesetzt wid. Dabei soll jeweils eine Isocyanatgruppe des Diisocyanates mit einer OH-Gruppe des Polyesters reagieren. Es liegt in der Natur der Reaktion, daß sowohl ein Teil der Diisocyanatmoleküle unreagiert in der Mischung verbleiben als auch zwei Polyestermoleküle über ein Diisocyanat miteinander verbunden werden. Im nachfolgenden dritten Reaktionsschritt wird ein allylgruppenhaltiger Alkohol mit den Isocyanatgruppierungen zur Reaktion gebracht. Dabei reagieren noch in der Reaktionsmischung befindliche Diisocyanate, u.a. mit zwei allylethergruppenhaltigen Alkoholen zu einer niedermolekularen Verbindung, die die lacktechnische Eigenschaften verschlechtert. In Wasser sind diese Produkte aufgrund der eingesetzten Polyester nur unter unverhältnismäßig hohem Emulgatoreinsatz emulgierbar.

Das umweltfreundlichste und physiologisch unbedenklichste Verdünnungsmittel zur Einstellung der Verarbeitungsviskosität von Lackbindemitteln ist Wasser. Die Herstellung von Polyurethan-Dispersionen auch mit ethylenisch ungesättigten Gruppen ist bekannt. In Ullmann's Enzyklopädie der Technischen Chemie, 4. Auflage, Band 19, Weinheim, 1980, sind vier Hauptherstellungsverfahren und die dafür benötigten Grundkomponenten aufgeführt. Es sind dies das Emulgator-Scherkraft-Verfahren, das Prepolymer-Ionomer-Mischverfahren, das Acetonverfahren und das Schmelz-Dispergier-Verfahren. Die Polyadditionsreaktionen werden bei den ersten drei Verfahren zumeist in Lösungsmitteln ausgeführt.

Dies erfordert bei nachfolgender Verwendung dieser Polyurethane in wäßrigen Systemen, z.B. als wäßrige Dispersionen, bekanntlich aufwendige Maßnahmen, um die Lösung des Polyurethans in dem organischen Lösungsmittel in eine wäßrige Form zu überführen bzw. in einem wäßrigen Medium zu dispergieren und zu stabilisieren und anschließend das organische Lösungsmittel wieder aus dem wäßrigen System zu entfernen.

Mit Hilfe des Emulgator-Scherkraft-Verfahrens läßt sich unter Zuhilfenahme von geeigneten Emulgatoren und starken Scherkräften jedes Polyurethan in eine Emulsion bzw. Dispersion vom Öl-in-Wasser-Typ überführen. Im allgemeinen werden hier Isocyanat-Präpolymere in Wasser dispergiert und anschließend durch Amin-Kettenverlängerung in einer heterogenen Zweiphasenreaktion umgesetzt. Das Endprodukt ist ein Polyurethanharnstoff. Die fertige Dispersion enthält im allgemeinen noch einen Lösungsmittelrest. Dieses Verfahren ist jedoch energieaufwendig, und der Emulgatorzusatz verschlechtert die Lackqualität.

Die größte technische Bedeutung haben emulgatorfreie Ionomerdispersionen. Hierbei wird ein Polyurethanionomer mit freien Isocyanatgruppen in einem Lösungsmittel hergestellt, mit dem Lösungsmittel dispergiert und meist kettenverlängert. Nachfolgend muß das Lösungsmittel abdestilliert werden. Es verbleiben Lösungsmittelreste in der Dispersion. Der hohe Anteil an ionischen Gruppen führt zu schlechter Wasserbeständigkeit der gehärteten Lacke.

Die Emulgierung eines Präpolymeren in Wasser und nachfolgende Kettenverlängerung als heterogene Zwei-Phasen-Reaktion ist Stand der Technik auch für das Schmelzdispergierverfahren (vergleiche Ullmann: Encyklopädie der Technischen Chemie, s.o.). Auch beim Schmelzdispergierverfahren werden stark ionische Polymere erzeugt und eine Nachreaktion in der Dispersion ist erforderlich.

In der DE-A-2 923 338 ist die Reifung einer wäßrigen Polyesterdispersion beschrieben, die dadurch gekennzeichnet ist, daß diese Dispersion zusätzlich mindestens ein polyfunktionelles, aliphatisches und/oder cycloaliphatisches Isocyanat mit 0,005 - 0,1 Mol NCO/100 g Polyester enthält Isocyanathaltige Produkte sind physiologisch stark bedenklich, da diese zu starken Reizungen von Haut, Augen und Schleimhäuten führen und langfristige Schäden verursachen können. Der Umgang mit isocyanathaltigen Lackbindemitteln ist zudem durch erhöhte Sicherheitsvorschriften erschwert. Die unspezifische Reaktion des Isocyanats, zum einen mit den Lackrohstoffen, zum anderen mit dem Wasser, führt zur Einführung von hydrophilen Gruppen, die die Wasserfestigkeit beeinträchtigen. Zudem ist eine starke Gasbildung zu verzeichnen. Die Lagerstabilität wird entsprechend beeinträchtigt (siehe Beispiel).

In der DE-A-3 829 588 werden Allylurethane beschrieben, die durch Umsetzung einer Polyglykol-Mischung bzw. dessen Veresterungsproduktes mit einem Polyisocyanat und einer Hydroxyallylverbindung hergestellt werden. Bei dieser Reaktion kann es zur Bildung von niedermolekularen Umsetzungsprodukten aus Diisocyanat und Hydroxyallylverbindung kommen. In diesem Produkt werden hochmolekulare Polyglykole, wie das Polyethylenglykol 2000, eingesetzt. Dies verringert bekanntermaßen die Wasserfestigkeit des Lackes, außerdem wird die Lackoberfläche gummiartig stumpf.

Die DE-A-3 829 590 betrifft Allylurethane, die nicht wasserdispergierbar sind, sondern in einem organischen Lösungsmittel appliziert werden müssen. Dies bedingt den Einsatz von kostenaufwendigen Abluftverbrennungsanlagen.

Aufgabe der vorliegenden Erfindung war es, ein wasserdispergierbares bzw. wasserlösliches, polymerisierbares Bindemittel auf der Basis ungesättigter urethangruppenhaltiger Polyester zur Verfügung zu stellen, das durch energiereiche Strahlung und auch peroxidisch härtbar ist, obengenannte Nachteile nicht aufweist und nach der Härtung gute Lackeigenschaften, insbesondere verbesserte Härte und Haftfestigkeit, ein verringertes Eindringen in Holz zeigt sowie keine freien Isocyanatgruppen und keine Lösungsmittelreste aufweist.

Gegenstand der Erfindung sind ungesättigte Polyesterpolyurethane P auf Basis eines eine Allylethergruppierung enthaltenden Polyesters A und eines Polyisocyanates B, dadurch gekennzeichnet, daß im Polyester A der Allyletherrest über eine Estergruppierung an den Rest des Polyesters gebunden ist und daß der Polyester A aus folgenden Komponenten besteht
- C: einer α,β-ethylenisch ungesättigten Carbonsäure oder eines Anhydrids ausgewählt aus der Gruppe von Maleinsäure, Chlormaleinsäure, Fumarsäure, Citraconsäure, Itaconsäure, Mesaconsäure.
- D: eines hydroxylgruppenhaltigen Allylethers,
- E: eines Polyalkylenglykols ausgewählt aus Polyoxyethylenglykol und/oder Polyoxypropylenglykol mit einem Molgewicht von 300 - 1000,
- G: einem ethoxylierten und/oder propoxylierten Triol sowie gegebenenfalls einem alkoxylierten 4- bis 6-wertigen Polyol und gegebenenfalls
- F: einem gesättigten einwertigen Alkohol ausgewählt aus der Gruppe von Methanol, Ethanol, Butanol, Pentanol, Heptanol, Isotanol, Hexanole, Octanole, Decanole, Cetylalkohole, Hexahydrobenzalkohol
und daß die Umsetzung bei 50 - 120°C in Abwesenheit von Wasser und Lösungsmitteln unter Inertgasatmosphäre erfolgt, wobei die Reaktion bis zur vollständigen Umsetzung der Isocyanatgruppen durchgeführt wird.

In einer bevorzugten Ausführungsform entspricht A folgender allgemeinen Formel 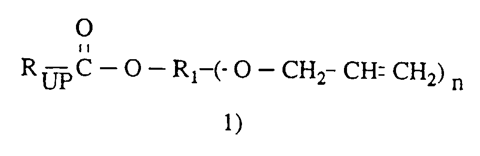 worin bedeuten:
- R_{UP}: Rest eines ungesättigten Polyesterpolyols nach Entfernung einer Carboxyl-Gruppe,
- R₁: Rest eines Polyols nach Entfernung von wenigstens zwei OH-Gruppen, insbesondere ein Trimethylolpropanrest nach Entfernen von zwei OH-Gruppen,
- n: eine ganze Zahl von 1 bis 4, wobei der Polyester A eine OH-Zahl von wenigstens 30, insbesondere wenigstens 40 aufweist.

Die Herstellung der ungesättigten Polyesterpolyurethane P durch Umsetzung von
- A: eines allylethermodifizierten Polyesters A mit
- B: einem Polyisocyanat B erfolgt durch
eine Polyadditionsreaktion in Abwesenheit von Wasser und Lösungsmitteln unter Inertgasatmosphäre bei Temperaturen von 50°C bis 120°C, insbesondere von 60°C bis 80°C.

Ein weiterer Gegenstand der Erfindung ist ein Verfahren zu Herstellung einer wäßrigen Lackzusammensetzung.

Überraschenderweise wurde nun gefunden, daß durch die Umsetzung von ungesättigten Allylether-funktionellen Polyestern mit Polyisocyanaten Bindemittel mit den obengenannten Eigenschaften herstellbar sind. Charakteristisch für die erfindungsgemäßen ungesättigten Polyesterpolyurethane ist, daß die allyletherfunktionelle Gruppe über eine Esterbindung und nicht über eine Urethangruppierung an den Rest des Polyesters gebunden ist.

Beim erfindungsgemäßen Verfahren werden im Gegensatz zu den heterogenen Zwei-Phasen-Reaktionen mit Kettenverlängerung vorwiegend nichtionische Polymere hergestellt, die sich in flüssiger Form durch Mischen mit geringen Scherkräften ohne Emulgatoren in wäßrige Dispersionen überführen lassen. Dies ermöglicht den balastfreien Transport auch 100 %iger Produkte.

Erfindungsgemäß werden vorzugsweise Allylether-funktionelle, ungesättigte Polyester-Urethane, auf Basis von
80 - 99 Gew.-Teilen,
bevorzugt 88 - 98 Gew.-Teilen,
besonders bevorzugt 88 - 96 Gew.-Teilen, eines wasserdispergierbaren bzw. wasserlöslichen allyletherfunktionellen, ungesättigten Polyesters A,
und 1 - 20 Gew.-Teilen,
bevorzugt 2 - 12 Gew.-Teilen,
besonders bevorzugt 2 - 10 Gew.-Teilen eines
Polyisocyanates B, verwendet.

Die Herstellung von Allylether-funktionellen, ungesättigten Polyestern, die ohne Emulgatoren wasserdispergierbar sind, ist bekannt aus DE-OS 3 441 154 (EP-A-182 147), DE-OS2 905 666, DE-OS 2 804 216, DE-OS-3 218 200.

Diese Polyester sind aufgrund ihres Gehaltes an Polyalkylenglykolen wasserdispergierbar, wie auch in diesen Patentvorschriften aufgeführt wird.

Die Allylether-funktionellen Alkohole D enthalten neben mindestens einer veresterungsfähigen Hydroxygruppe noch mindestens einen, vorzugsweise zwei oder mehr Allyletherreste.

Geeignete Alkohole D sind z.B. Allyl-, Methallyl-, Ethallyl-, Chlorallyl-ether wie oxethylierter oder oxpropylierter Allyl-, Methallyl-, Ethallyl- oder Chlorallylalkohol, Glycerin-mono- oder -diallylether, Trimethylolethan-mono- oder -dimethallylether, Trimethylolpropan-mono- oder -diallylether, 1,3,5-Hexantriol-mono- oder -dichlorallylether, Pentacrythrit-mono-, -di- oder -triallylether, Tetramethylolcyclohexanoltetraallylether, Buten-(2,3)-diol-1,4-monoallylether, gemischte Ether, wie Trimethylolpropan-monoallyl-monocrotylether und Pentaerythrit-mono- oder -diallyl-mono-benzylether. Besonders bevorzugt sind Trimethylolpropan-mono- und -diallylether.

Die Polyole G sind drei- bis sechswertige oxalkylierte Alkohole. Unter oxalkylierten Alkoholen werden oxethylierte und/oder oxpropylierte Triole verstanden, gegebenenfalls mit einem alkoxylierten vier bis sechswertigen Polyol z.B. Trimethylolpropan, Trimethylolethern, Pentaerythrit, Erythritsorbit, Di-trimethylolpropan und Di-pentaerythrit.

In einer besonders bevorzugten Ausführungsform werden die Komponenten A - F in folgenden Mengenverhältnissen eingesetzt:

| | |
|---|---|
| Polycarbonsäure C | 15 - 45 Gew.-T., insbesondere |
| | 20 - 35 Gew.-T., |
| | |
| allyletherhaltiger Alkohol B | 15 - 45 Gew.-T., insbesondere |
| | 20-40 Gew.-T., |
| | |
| Alkohole E | 10 - 40 Gew.-T., insbesondere |
| | 15 - 35 Gew.-T., |
| | |
| einwertige Alkohole F | 0 - 15 Gew.-T., |
| | |
| Polyole G | 0 - 40 Gew.-T.. |

Eine Verringerung des Molekulargewichts bzw. eine Modifikation der Eigenschaften, insbesondere der Dispergier- oder Löslichkeitseigenschaften, ist durch Einsatz von einwertigen Alkoholen F möglich, wie Methanol, Ethanol, Butanol, Pentanol, Heptanol, Isooctanol, Allylalkohol, Benzylalkohol, alle Hexanole, Octanole und Decanole, Cetylalkohole, Hexahydrobenzylalkohol, β-Phenylethanol und Polyalkylenglykolalkylether.

Die Herstellung der Polyester kann nach bekannten Methoden, z.B. durch Schmelz- oder Azeotropveresterung der Alkohole und Säuren oder deren veresterungsfähigen Derivaten, z.B. ihrer Anhydride, erfolgen (vergleiche Methoden der Organischen Chemie, Houben-Weyl, 4. Auflage, Band 14/2, Georg-Thieme-Verlag, Stuttgart, 1961). Bevorzugt ist die Schmelzkondensation unter Inertgasatmosphäre bei Temperaturen von 140 - 200°C, vorzugsweise von 150 - 180°C.

Um die Polyester vor unerwünschter vorzeitiger Vernetzung zu bewahren, können bereits bei der Herstellung der Polyester Polymerisationsinhibitoren oder Antioxidantien zugesetzt werden. Geeignete Stabilisatoren sind in "Methoden der Organischen Chemie", Houben/Weyl. 4. Auflage, Band 14/1, Seite 433, Georg-Thieme-Verlag, Stuttgart, 1961, beschrieben.

Dabei handelt es sich um die üblichen, zur Verhinderung einer thermischen Polymerisation verwendeten Verbindungen, z.B. Phenole und Phenolderivate; vorzugsweise sterisch gehinderte Phenole, wie das 2,6-Di-tert.-butyl-phenol, Amine, Nitrosamine, Chinone, Hydrochinonmonoalkylether, Phenothiazine oder Phosphorigsäureester. Sie werden im allgemeinen in Mengen von 0,001 - 3,0 Gew.-%, vorzugsweise in Mengen von 0,005 - 0,5 Gew.-% eingesetzt. Sehr gut geeignet ist z.B. Toluhydrochinon in einer Konzentration von 0,01 - 0,05 Gew.-%

Überraschenderweise konnte beim Härten des Bindemittels mit den in der Technik sehr häufig eingesetzten aromatischen Keton-Foto-Initiatoren auf den Einsatz von Aminen als Aktivator vollständig ohne Geschwindigkeitseinbuße verzichtet werden.

Zum Erhalt des ungesättigten Polyesterpolyurethans P werden die Allylether-funktionellen, ungesättigten Polyester A nachfolgend mit einem Polyisocyanat B bei Temperaturen von 50 - 120°C, bevorzugt von 60 - 80°C, unter Inertgasatmosphäre umgesetzt. Es können aliphatische, cycloaliphatische, araliphatische oder aromatische Polyisocyanate eingesetzt werden. Bevorzugt sind aliphatische und cycloaliphatische Polyisocyanate. Geeignet sind auch Gemische dieser Polyisocyanate. Beispiele für geeignete Polyisocyanate sind:
Ethylendiisocyanat, Trimethylendiisocyanat, Tetramethylendiisocyanat, Pentamethylendiisocyanat, Hexamethylendiisocyanat, 2-Methylpentamethylen-diisocyanat, Dodecamethylen-diisocyanat, Ethylethylendiisocyanat, 2,3-Dimethylethylendiisocyanat, 1-Methyl-trimethylendiisocyanat 1,3-Cyclopentylendiisocyanat, 1,4-Cylohexylendiisocyanat, 1,3-Cyclohexylendiisocyanat, 1,3-Phenylendiisocyanat, 1,4-Phenylendiisocyanat, 2,4-Toluylendiisocyanat, 2,6-Toluylendiisocyanat, 1,5-Naphthylendiisocyanat, 1,4-Naphthylendiisocyanat, 4,4'-Diisocyanatodiphenylether, 2,3-Bis-(8-isocyanato-octyl)-4-octyl-5-hexyl-cyclohexen, Isophorondiisocyanat, Diphenylmethan-2,4'- und/oder 4,4'-diisocyanat, cyclobutan- 1,3-diisocyanat, 2,6-Hexahydrotoluylendiisocyanat, 2,4-Hexahydrotoluylendiisocyanat, Hexahydro-1,3- und/oder 1,4-phenylendiisocyanat, Triphenylmethan-4,4',4''-triisocyanat, Trimethylhexandiisocyanat, Dicyclohexyl-methan-, -4,4'- (und/oder -2,4'- und/oder -2,2')-diisocyanat und ihre Mono- und Dimethyl-substituierten Derivate sowie Triisocyanate und Polyisocyanate, die durch Trimerisation oder Oligomerisation von Diisocyanaten oder durch Reaktion von Diisocyanaten mit polyfunktionellen OH- oder NH-gruppenhaltigen Verbindungen entstehen. Hierzu gehören beispielsweise das Biuret von Hexamethylendiisocyanat und Wasser, das Isocyanurat des Hexamethylendiisocyanats und das Addukt von Isophorondiisocyanat an Trimethylolpropan. Besonders bevorzugt ist Hexamethylendiisocyanat.

Die Reaktion wird bis zur vollständigen Umsetzung der Isocyanatgruppen durchgeführt. Es können auch bekannte, die Isocyanat-Additionsreaktion beschleunigende Katalysatoren zugesetzt werden. Geeignete Katalysatoren sind beispielsweise tertiäre Amine, wie Triethylamin, Triethylendiamin oder Diethylenbenzylamin, oder beispielsweise bekannte Zinn-Katalysatoren, wie Zinndioctoat oder Dibutylzinndilaurat. Dieser Schritt erfolgt nicht in wäßriger Phase und vorzugsweise in Abwesenheit von Lösungsmitteln. Weiterhin können dem Reaktionsgemisch zur Verhinderung vorzeitiger Polymerisation der Allylgruppen Inhibitoren, wie oben beschrieben, zugesetzt werden.

Man erhält ein als Lackbindemittel geeignetes Polyesterpolyurethan, welches mit Wasser ohne Zusatz von Hilfsstoffen, z.B. Emulgatoren, verdünnbar ist.

Die Verdünnung mit Wasser ohne Zusatz von Emulgatoren kann je nach Art des Polyesterurethans und des Verdünnungsgrades zu einer klaren homogenen Lösung (wasserlöslich) bis zu einer Dispersion mit einer max. Teilchengröße von 10 µm, vorzugsweise von 5 µm, führen. Zur Durchführung dieser Verdünnung sind alle Dispergiergeräte mit ausreichend hohen Umfangsgeschwindigkeiten von 1 bis 50 m/s, vorzugsweise 3 bis 30 m/s geeignet.

Eine Neutralisation überschüssiger Carboxylgruppen mit Aminen ist zur Erreichung der Wasserverdünnbarkeit nicht erforderlich. Die Lackbindemittel weisen im ausgehärteten Zustand die Vorzüge, wie z.B. guter Verlauf, Kratzfestigkeit, Haftung und Härte von Urethanacrylaten bzw. von Zwei-Komponenten-Polyurethanlacken, auf, ohne deren Nachteile, wie physiologisch bedenkliche Isocyanate bzw. Acrylsäureester, zu besitzen. Gegenüber Urethanacrylaten ist das verringerte Eindringen in den Holzuntergrund hervorzuheben.

Die Lackbindemittel können die zur Erzielung besonderer technischer Effekte notwendigen Komponenten, wie Füllstoffe, Pigmente, Farbstoffe, Thixotropiermittel, Glättmittel, Mattierungsmittel und Verlaufmittel usw., in üblichen Mengen enthalten. Die Lackeigenschaften können auf Wunsch durch Zusatz von Reaktivverdünnem oder weiteren hochemolekularen Lackbindemitteln entsprechend den jeweiligen Erfordernissen verändert werden. Sie können mit weiteren üblichen Lackrohstoffen kombiniert werden, wie z.B. Nitrocellulose, Polyacrylatharzen, Alkydharzen, ungesättigten Polyestern und weiteren strahlenhärtbaren Komponenten.

Das Lackbindemittel kann nicht nur mit Wasser dispergiert, sondern auf Wunsch auch in organischen Lösungsmitteln und in Reaktivverdünnern gelöst werden.

Geeignete Applikationsformen sind Spritzen, Walzen, Rakeln, Gießen, Streichen und Tauchen.

Das Bindemittel kann nach Verdunstung des Wassers polymerisiert werden, wobei man Lackschichten mit günstigen Oberflächeneigenschaften, vorzugsweise auf Holz, aber auch auf Kunststoffen und Metallen, erhält. Die Polymerisation kann thermisch und/oder unter Zusatz von Polymerisationsinitiatoren (z.B. Radikalbildnern) erfolgen, aber auch durch energiereiche Strahlung (UV-Elektronen-, Röntgen- oder Gammastrahlen, wobei Photoinitiatoren zugesetzt werden können), besonders bevorzugt ist die UV-Härtung.

Als Photoinitiatoren sind die für die Strahlungshärtung bekannten Verbindungen geeignet, z.B. aromatische Ketonverbindungen, Benzophenone, Alkylbenzophenone, halogenmethylierte Benzophenone, Michlers Keton, Antron und halogenierte Benzophenone. Weiter geeignet sind 2,4,6-Trimethylbenzoyl-diphenylphosphinoxid, Phenylglyoxylsäureester, Anthrachinon und seine zahlreichen Derivate, besonders Benzoin und seine Derivate, ferner Benzilketale und Hydroxyalkylphenone. Beispiele für geeignete Initiatoren sind in den deutschen Offenlegungsschriften 1 769 168, 1 769 853, 1 769 854, 1 807 297, 1 807 301, 1 919 678 sowie der DE-AS 1 694 143 beschrieben. Gemische dieser Verbindungen können ebenfalls verwendet werden.

Die Härtung kann auch mit polymerisationsauslösenden Radikalbildnern erfolgen. Bevorzugt werden wasserlösliche Peroxide, wie Wasserstoffperoxid und Acetylacetonperoxid, weiter Methylethylketonhydroperoxid, Cyclohexanperoxid oder die wäßrigen Emulsionen der nichtwasserlöslichen Initiatoren.

Diese Radikalbildner können in bekannter Weise mit Beschleunigern, wie z.B. den Schwermetallsalzen von Carbonsäuren, den Chelaten dieser Metalle, wie den Acetaten, Naphthenaten oder Acetylacetonaten von Kobalt, Mangan oder Vanadium, kombiniert werden. Auch die Beschleuniger können entweder, falls sie wasserlöslich sind, in Form ihrer wäßrigen Lösung, anderenfalls als wäßrige Emulsion zugesetzt werden.

### Beispiele:

### Herstellung der Polyester:

Der Polyester A 1 (nicht erfindungsgemäß) auf Basis von:
38,3 Gew.-% Trimethylolpropandiallylether,
29,2 Gew.-% Maleinsäureanhydrid,
12,9 Gew.-% Benzylalkohol,
12,5 Gew.-% Polyethylenglykol 1550,
12,5 Gew.-% Propylenglykol
wurde nach aus der DE-A-3 441 154 bekannten Verfahren unter Stickstoffdurchleitung durch Schmelzkondensation hergestellt. Die Säurezahl betrug 18 - 20 mg KOH/g, die Hydroxylzahl betrug 49 mg KOH/g.

Die weiteren Allylether-funktionellen Polyester wurden nach identischer Vorschrift hergestellt.

### Polyester A 2:

27,6 Gew.-% Polyethylenglykol 400,
27,6 Gew.-% triethoxyliertes Glycerin,
24,7 Gew.-% Maleinsäureanhydrid,
20,1 Gew.-% Trimethylolpropandiallylether.

Die Säurezahl betrug 20 mg KOH/g Polymer, die Hydroxylzahl betrug 51 mg KOH/g.

### Polyester A 3:

24,6 Gew.-% Polyethylenglykol 400,
23,0 Gew.-% triethoxyliertes Glycerin,
23,4 Gew.-% Maleinsäureanhydrid,
29,0 Gew.-% Trimethylolpropandiallylether.

Die Säurezahl betrug 22 mg KOH/g Polymer, die Hydroxylzahl 50 mg KOH/g.

### Polyester A 4:

16,2 Gew.-% Polyethylenglykol 400,
29,0 Gew.-% triethoxyliertes Glycerin,
24,5 Gew.-% Maleinsäureanhydrid,
30,3 Gew.-% Trimethylolpropandiallylether.

Die Säurezahl betrug 25 mg KOH/g Polymer, die Hydroxylzahl 51 mg KOH/g.

### Polyester A 5:

23,2 Gew.-% Polyethylenglykol 600,
30,9 Gew.-% triethoxyliertes Glycerin,
23,5 Gew.-% Maleinsäureanhydrid,
22,5 Gew.-% Trimethylolpropandiallylether.

Die Säurezahl betrug 24 mg KOH/g Polymer, die Hydroxylzahl 55 mg KOH/g.

### Polyester A 6:

22,6 Gew.-% Polyethylenglykol 400,
2,0 Gew.-% pentaethoxyliertes Pentaerythrit,
27,4 Gew.-% triethoxyliertes Glycerin,
24,5 Gew.-% Maleinsäureanhydrid,
23,5 Gew.-% Trimethylolpropandiallylether.

Die Säurezahl betrug 25 mg KOH/g Polymer, die Hydroxylzahl 50 mg KOH/g.

### Beispiele 1 - 7 (nicht erfindungsgemäß)

Der Polyester A 1 wurde mit verschiedenen Polyisocyanaten und verschiedenen Polyisocyanatkonzentrationen, wie in nachfolgender Tabelle 1 dargestellt, bei 65 - 70°C unter Stickstoff unter Rühren umgesetzt, bis kein Isocyanat mehr nachweisbar war.

### Herstellung der Dispersionen und Lösungen:

Zur Herstellung der Dispersion wurde dem erfindungsgemäßen Bindemittel im Dissolver bei 60°C Anfangstemperatur die gleiche Menge Wasser zugesetzt, so daß der Festkörpergehalt auf 50 % eingestellt werden konnte.

In Beispiel 8 wurde das unter Beispiel 2 hergestellte Bindemittel nicht mit Wasser dispergiert, sondern 80 %ig in Butylacetat gelöst und unter identischen Bedingungen wie die Dispersion abgeprüft.

### Prüfung des Lackbindemittels:

Nach Zusatz von 3 Gew.-% des Gemisches der Fotoinitiatoren 2-Hydroxy-2-methyl-1-vinyl-propan-1-on: Benzophenon im Verhältnis 2:1 zu den Dispersionen wurden die Proben auf eine Glasplatte in einer Schichtstärke von 90 µm aufgerakelt, getrocknet und mit UV-Licht bestrahlt (80 W/cm). Man erhält transparente, kratzfeste Filme. Die Pendelhärte wurde nach König (DIN 53 157) bestimmt. Die Lackierungen sind entsprechend DIN 53 168 wasserbeständig.

In gleicher Weise wurde eine Holzplatte mit einer Schichtstärke 120 µm beschichtet, getrocknet und mit UV-Licht bestrahlt. Hierbei wurde sowohl der Verlauf als auch das Eindringen des Lackes in den Untergrund beurteilt.

### Vergleichsbeispiel 1:

Im Vergleichsbeispiel wird der Polyester A 1 nicht weiter mit einem Diisocyanat vernetzt. Die Pendelhärte ist deutlich geringer, und der Lack dringt sehr stark in den Untergrund ein.

### Vergleichsbeispiel 2:

Der Polyester A 1 wurde nach der DE-A- 2 923 338 vor der Dispergierung mit 4,5 % Hexamethylendiisocyanat versetzt und sofort dispergiert. Die Dispersion schäumte noch nach einem Tag stark nach und war damit nicht verwendungsfähig. Erst nach drei Tagen konnte eine Ausprüfung des Lackbindemittels stattfinden. Die Pendelhärte ist im Vergleich zum Ausgangspolyester mit 60 sec nicht deutlich angestiegen und sehr viel geringer als die der erfindungsgemäßen Bindemittel. Der Lack dringt im Gegensatz zu den erfindungsgemäßen Bindemitteln stark in den Untergrund ein. Die Topfzeit betrug nur 7 Tage, während die Dispersionen und Lösungen der erfindungsgemäßen Produkte mehr als drei Monate stabil blieben.

### Beispiele 8-13:

Die Polyester A 2 - A 6 wurden analog zu den Beispielen 1 - 7 mit Hexamethylendiisocyanat umgesetzt. Es wurden durch Zusatz von Wasser 80 %ige klare Lösungen hergestellt und diese unter identischen Bedingungen wie die Dispersionen abgeprüft. In allen Fällen wurden Beschichtungen hoher Härte erzielt, die kratzfest waren und das in den Vergleichs-Beispielen 1 + 2 beschriebene Eindringen in den Untergrund nicht aufwiesen.

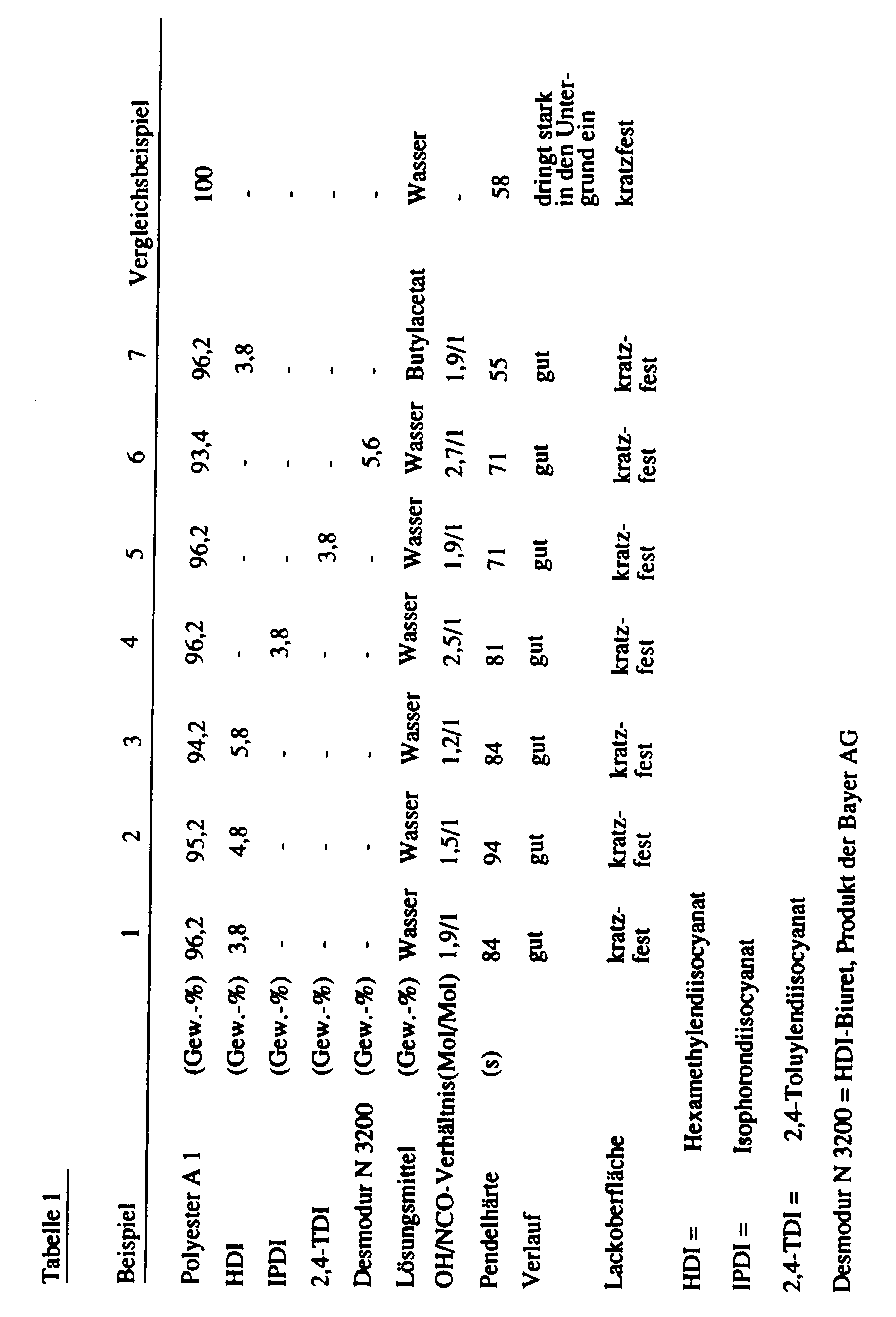

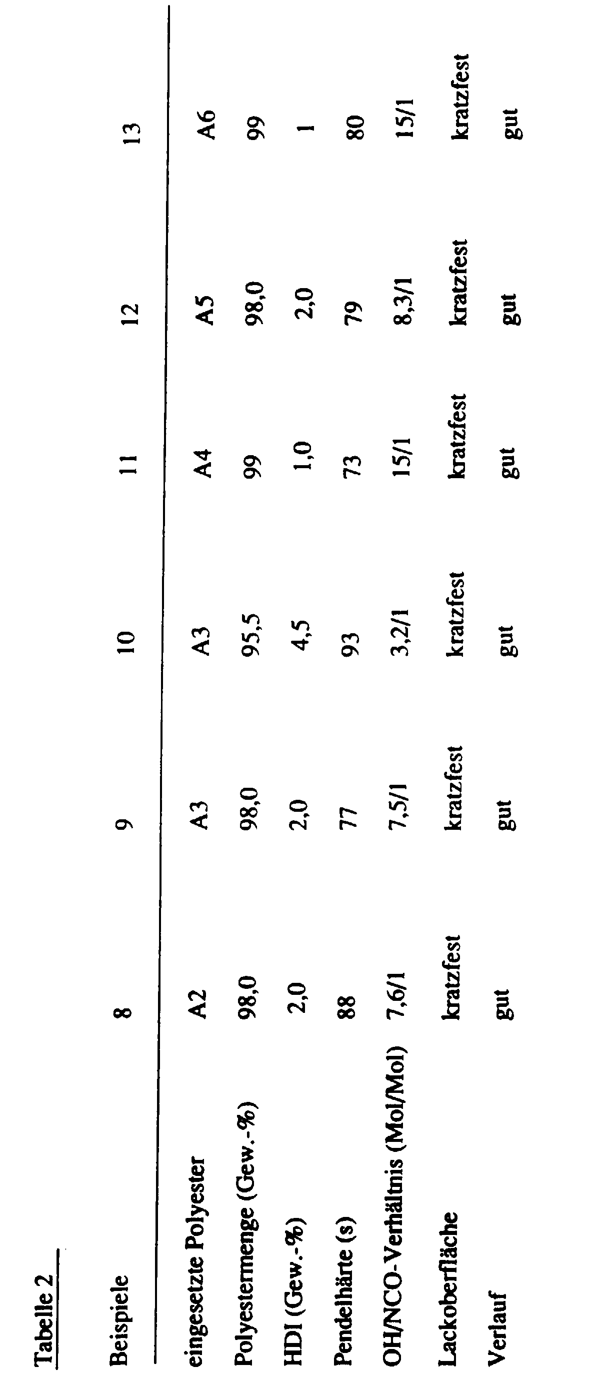

## Patentansprüche

1. Verfahren zur Herstellung eines ungesättigten Polyesterpolyurethans P auf Basis eines eine Allylether-gruppierung enthaltenden Polyesters A und eines Polyisocyanates B, dadurch gekennzeichnet, daß im Polyester A der Allyletherrest über eine Estergruppierung an den Rest des Polyesters gebunden ist und daß der Polyester A aus folgenden Komponenten besteht
C einer α,β-ethylenisch ungesättigten Carbonsäure oder eines Anhydrids ausgewählt aus der Gruppe von Maleinsäure, Chlormaleinsäure, Fumarsäure, Citraconsäure, Itaconsäure, Mesaconsäure,
D eines hydroxylgruppenhaltigen Allylethers,
E eines Polyalkylenglykols ausgewählt aus Polyoxyethylenglykol und/oder Polyoxypropylenglykol mit einem Molgewicht von 300 - 1000,
G einem ethoxylierten und/oder propoxylierten Triol sowie gegebenenfalls einem alkoxylierten 4- bis 6-wertigen Polyol und gegebenenfalls
F einem gesättigten einwertigen Alkohol ausgewählt aus der Gruppe von Methanol, Ethanol, Butanol, Pentanol, Heptanol, Isotanol, Hexanole, Octanole, Decanole, Cetylalkohole, Hexahydrobenzalkohol
und daß die Umsetzung bei 50 - 120°C in Abwesenheit von Wasser und Lösungsmitteln unter Inertgasatmosphäre erfolgt, wobei die Reaktion bis zur vollständigen Umsetzung der Isocyanatgruppen durchgeführt wird.

2. Verfahren zur Herstellung einer wässrigen Lackzusammensetzung, dadurch gekennzeichnet, daß
a) ein Polyesterurethan nach einem Verfahren gemäß Anspruch 1 hergestellt wird und daß
b) das so hergestellte Polyesterurethan mit Wasser ohne Zuzsatz von Emulgatoren verdünnt wird.

## Claims

1. Process for the production of an unsaturated polyester polyurethane P based on a polyester A containing an allyl ether group and a polyisocyanate B,
characterised in that in the polyester A the allyl ether group is bonded to the rest of the polyester by an ester group and that the polyester A consists of the following components:
C an α,β-ethylenically unsaturated carboxylic acid or an anhydride selected from the group comprising maleic acid, chloromaleic acid, fumaric acid, citraconic acid, itaconic acid, mesaconic acid,
D an allyl ether containing hydroxyl groups,
E a polyalkylene glycol selected from polyoxyethylene glycol and/or polyoxypropylene glycol having a molecular weight of 300 to 1000,
G an ethoxylated and/or propoxylated triol and optionally an alkoxylated tetrahydric to hexahydric polyol and optionally
F a saturated monohydric alcohol selected from the group comprising methanol, ethanol, butanol, pentanol, heptanol, isotanol, hexanols, octanols, decanols, cetyl alcohols, hexahydrobenzyl alcohol
and that the reaction is carried out at 50°C to 120°C in the absence of water and of solvents under an inert gas atmosphere, the reaction being carried out until the conversion of the isocyanate groups is complete.

2. Process for the production of an aqueous paint composition, characterised in that
a) a polyester urethane is produced by a process according to claim 1 and that
b) the polyester urethane thus produced is diluted with water without addition of emulsifiers.

## Revendications

1. Procédé pour la préparation d'un polyesterpolyuréthanne insaturé P à base d'un polyester A contenant un groupement d'éther allylique et d'un polyisocyanate B, caractérisé en ce que, dans le polyester A, le radical d'éther allylique est lié via un groupement ester au radical du polyester et en ce que le polyester A est constitué par les composants ci-après:
C un acide carboxylique à insaturation éthylénique α,β ou un anhydride choisi parmi le groupe comprenant l'acide maléique, l'acide chloromaléique, l'acide fumarique, l'acide citraconique, l'acide itaconique, l'acide mésaconique,
D un éther allylique contenant un ou plusieurs groupes hydroxyle,
E un polyalkylèneglycol choisi parmi le polyoxyéthylèneglycol et/ou le polyoxypropylèneglycol possédant un poids moléculaire de 300 à 1000,
G un triol éthoxylé et/ou propoxylé et le cas échéant, un polyol alcoxylé tétra- à hexavalent et, le cas échéant,
F un alcool monovalent saturé choisi parmi le groupe comprenant le méthanol, l'éthanol, le butanol, le pentanol, l'heptanol, l'isotanol, des hexanols, des octanols, des décanols, des alcools cétyliques, l'alcool hexahydrobenzylique,
et en ce que la mise en réaction a lieu à une température de 50 à 120°C en l'absence d'eau et de solvants sous l'atmosphère d'un gaz inerte, la mise en réaction étant effectuée jusqu'à transformation complète des groupes isocyanates.

2. Procédé pour la préparation d'une composition aqueuse de laque, de vernis ou de peinture, caractérisé en ce que
a) on prépare un polyester-uréthane conformément à un procédé selon la revendication 1, et en ce que
b) on dilue le polyester-uréthane ainsi préparé avec de l'eau sans addition d'émulsifiants.
